# EUROPEAN PATENT SPECIFICATION

(11) **EP 3 187 465 B1**
(45) Date of publication and mention of the grant of the patent: **30.01.2019**
(21) Application number: 15425117.7
(22) Date of filing: 30.12.2015
(51) Int. Cl.: C01F 11/02, C04B 20/00, C04B 22/06, C04B 28/02

(54) **NANOTUBES, PROCESS FOR OBTAINING THEM AND CEMENTITIOUS COMPOSITIONS COMPRISING THEM**
NANORÖHRCHEN, VERFAHREN ZUR HERSTELLUNG DAVON UND ZEMENTARTIGE ZUSAMMENSETZUNGEN DAMIT
NANOTUBES, PROCÉDÉ POUR LEUR OBTENTION ET COMPOSITIONS DE CIMENT LES CONTENANT

(43) Date of publication of application: 05.07.2017
(73) Proprietor: ITALCEMENTI S.p.A., 24121 Bergamo (IT); Fundación Tecnalia Research & Innovation, 20009 San Sebastián (Gipuzkoa) (ES)
(72) Inventor: DOLADO, Jorge Sanchez, 48160 Derio (Bizkaia) (ES); JAUREGI, Edurne Erkizia, 48160 Derio (Bizkaia) (ES); MARCHI, Maurizio Iler, 20066 Melzo (IT)
(74) Representative: Gervasi, Gemma

(56) References cited:
- US-B2- 7 892 447
- FARAH DIANA MOHD DAUD ET AL: "Fabrication of Ca(OH)2 Nanostructures by Facile Solution - Based Synthesis at Various Reaction Temperatures as CO2 Adsorbent", MATERIALS SCIENCE FORUM, vol. 756, 14 May 2013 (2013-05-14), pages 175-181, XP055285598, ISSN: 0250-9776, DOI: 10.4028/www.scientific.net/MSF.756.175
- WEILIU FAN ET AL: "Solvothermal synthesis of Mg(OH)2 nanotubes using Mg10 (OH)18 Cl2. 5H2O nanowires as precursors", JOURNAL OF MATERIALS CHEMISTRY, vol. 13, no. 12, 31 October 2003 (2003-10-31), pages 3062-3065, XP055285650, GB ISSN: 0959-9428, DOI: 10.1039/B307619A
- H. MANZANO ET AL: "Do Cement Nanotubes exist?", ADVANCED MATERIALS, vol. 24, no. 24, 26 June 2012 (2012-06-26) , pages 3239-3245, XP055284911, DE ISSN: 0935-9648, DOI: 10.1002/adma.201103704
- Hassouna Dhaouadi ET AL: "Mg(OH)2 Nanorods Synthesized by A Facile Hydrothermal Method in the Presence of CTAB Citation: Hassouna Dhaouadi, Hedia Chaabane and Fathi Touati, "Mg(OH)2 Nanorods Synthesized by A Facile Hydrothermal Method in the Presence of CTAB", , 4 September 2011 (2011-09-04), pages 153-159, XP055284944, DOI: 10.3786/nml.v3i3.p153-159 Retrieved from the Internet: URL:http://www.nmletters.org/images/pdf/v4 /v3n3/153-159(192).pdf [retrieved on 2016-07-04]

## Description

### FIELD OF THE INVENTION

The present invention describes the preparation of nanotubes made from portlandite, the naturally occurring form of calcium hydroxide, Ca(OH)₂.

### BACKGROUND OF THE INVENTION

Cement-based materials are largely used in buildings especially for their resistance to compression. However these materials generally show a brittle response under tensile stress.

In order to overcome this deficiency, concrete is often strengthened by introducing reinforcing materials in the cementitious matrix, primarily such as steel rods or fibres, usually randomly oriented microfibres made from steel, glass or polymeric materials. The main aim of the use of steel rods is to prevent macro-cracking that could lead to structural failure, whilst the use of microfibers is mainly meant to reduce the formation of micro-cracks, usually brought about by autogeneous and drying-related shrinkage at the start of the hydration stage, and to inhibit the development of those micro-cracks into macro-cracks. However, since rods and microfibres mainly exert their structural function at higher scales, the above approaches to reinforcement do not take into sufficient account chemical and mechanical damages that could originate at the nanoscale inside concrete. In fact, a way to improve the properties of cement-based materials would be to fine-tune their nanostructure, a goal attempted in many ways but yet to be accomplished.

Several approaches have been proposed to improve the characteristics of the cementitious nanostructure. One of the approaches is the development of nano-fibres to refrain nano-cracks from forming and developing. See M. S. Konsta-Gdoutos, Z. S. Metaxa, S. P. Shah, Cem. Coricret Compos. 2010, 32, 110.

Nanotubes are nanometer-scale tube-like structures. Due to their high mechanical properties, tensile strength, elastic modulus and aspect ratio, nanotubes made from carbon (CNTs) have been suggested to be an ideal reinforcement material, see for example M. Endo, S. lijima, M. S. Dresselhaus, Carbon nanotubes, Pergamon Press, Oxford, UK, 1997; M. R. Falvo, G. J. Clary, R. M. Taylor, V. Chi, F. P. Brooks, S. Washburn, R. Superfine Nature 1997, 389, 582; S. lijima, T. Ichihashi Nature 1993, 364, 737.

However, since carbon nanotubes are hydrophobic, it must be taken into account that their chemical nature is quite different from the inorganic minerals that form a cementitious matrix, so that CNTs would tend to bundle up, which makes it difficult to disperse them homogeneously and have them finally anchored to a cementitious matrix. Due to these reasons, CNTs turn out to be difficult to be used as reinforcing elements in cement based materials.

More adequate nanotubes to be used in the field of cementitiuos materials would reasonably be those that could be chemically more compatible with the main components of a cementations matrix, thus potentially providing a higher affinity for the cementitious matrix and improved mechanical properties of the final product.

In theory, an example of such nanotubes could be nanotubes of portlandite and/or tobermorite. Portlandite is an oxide mineral, the naturally occurring form of calcium hydroxide, Ca(OH)₂. It is a hydration product of Portland cement and the calcium analogue of brucite, Mg(OH)₂.

Tobermorite is a calcium silicate hydrate mineral. Portlandite and tobermorite are inorganic layered compounds and nanotubes of these materials are not known to date.

Recent atomistic simulations have shown chances that portlandite nanotubes could in theory exist since the bending energy required for their formation is equivalent to the one found in other existing inorganic nanotubes such as Mg(OH)₂ and carbon nanotubes, see H. Manzano et al., Advanced Materials 24 (24), 3239-3245, 2012. However, apart from the above theories, to date, as mentioned, no synthesis of portlandite nanotubes has been described and no reports of naturally occurring portlandite nanotubes have been found either.

In the existing literature, the preparation of different tubular inorganic materials such as metal dichalcogenides, halides, oxides and hydroxides can be found. Among hydroxides, the synthesis of Mg(OH)₂ nanotubes have also been reported, see for example W. Fan et al., J. Mat. Chem. 13, 3062-3065, 2003. Since magnesium belongs to the same group of the periodic table as calcium, they share certain chemical trends so that, a synthetic route used to obtain the Mg(OH)₂ nanotubes could be, in theory, used by analogy as a model to obtain calcium hydroxide nanotubes.

However, it has to be underlined that due to its chemical-physical characteristics the calcium ion does not completely behave as the magnesium ion does and so such analogous reactions might not have a similar outcome. It is known that, compared to magnesium, calcium (as well as strontium and barium) shows a higher reactivity and ligand exchange. Also, in the case of the hydroxide compounds, calcium hydroxide is a stronger base than magnesium hydroxide, soluble in water whilst Mg(OH)₂ is insoluble. Ca(OH)₂ reacts quite readily with CO₂ to give CaCO₃, whereas Mg(OH)₂ is quite stable towards carbonation. In fact, the following publications concerning the synthesis of calcium carbonate nanotubes for biological applications, namely drug delivery, can be mentioned: H. Sugihara et al. Materials Letters 63, 322-324, 2009; J. Tang et al. Biol. Trace Elem. Res. 147, 408-417, 2012.

However, as said, no reports on portlandite nanotubes can be found to date.

The aforementioned W. Fan et al. synthesized Mg(OH)₂ nanotubes through a precursor, i.e. Mg₁₀(OH)₁₈Cl_{2•}5H₂O nanowires obtained by reacting a magnesium chloride (MgC)_{2•}6H₂O) solution with magnesium oxide. The precursor, or intermediate, was then filtered, washed and dried, and afterwards placed in a autoclave with ethylenediamine as a solvent to undergo a solvothermal reaction, carried out at 180°C for 6 hours. After completion of the solvothermal reaction the above-mentioned magnesium hydroxide nanotubes were obtained. The authors suggest that the formation of such Mg(OH)₂ nanotubes is due to two factors, the first one being the wire-like morphology of the Mg₁₀(OH)₁₈Cl_{2•}5H₂O precursor, and the second one the use of the ethylenediamine coordinating bidentate ligand which is believed to play a key role in the mechanism of the formation of the Mg(OH)₂ nanotubes.

Also L. Zhuo et al., Crystal growth and design, 9 (1), 1-6, 2009, describe a solvothermal synthesis of Mg(OH)₂ nanotubes carried out in autoclave, where again intermediates need to be isolated, and washing and centrifugation steps to be repeated several times (5 to 7 times) are required before carrying out the solvothermal reaction in water/methanol 1:1 solution.

When first trying to develop a possible synthetic route for Ca(OH)₂ nanotubes according to the purposes of the present invention, as a first attempt a similar reaction to the model proposed in the aforementioned W. Fan et al. was carried out, aiming at possibly producing Ca(OH)₂ nanotubes instead of Mg(OH)₂ through an analogous route. Thus, by firstly reacting calcium chloride dihydrate (instead of MgCl_{2•}6H₂O) with CaO (instead of MgO), a white solid precursor, or intermediate, was obtained; it was filtered, washed and dried, and afterwards placed in a autoclave with ethylenediamine as a solvent to subject it to a solvothermal reaction.

The process is summarised by the following reaction schemes 1 and 2.

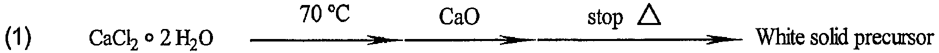

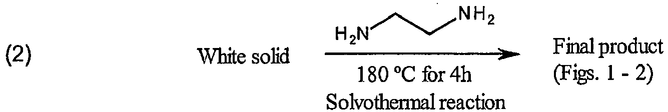

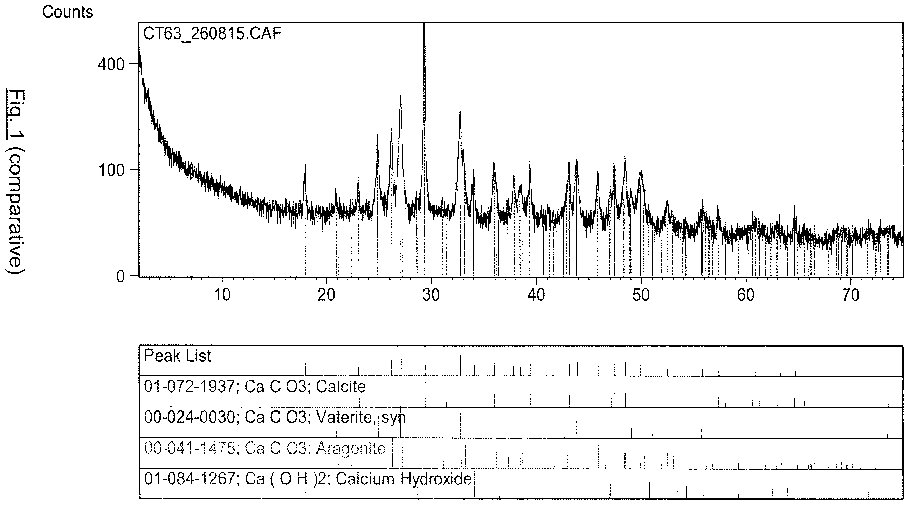

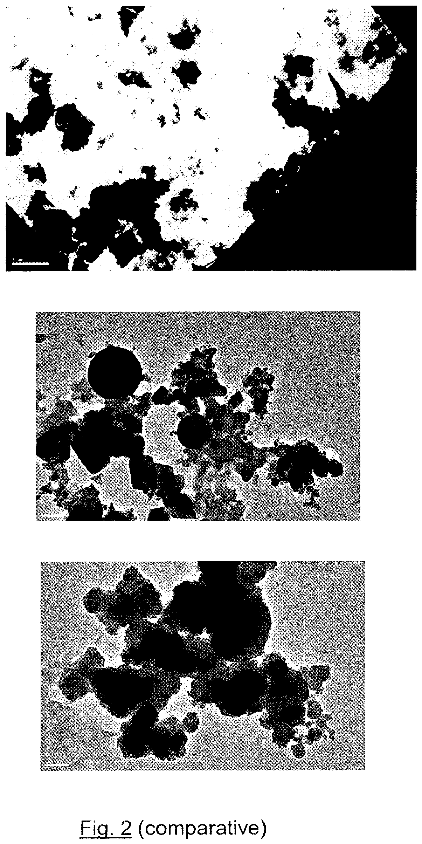

The final product was a mixture including calcium carbonate as well as some Ca(OH)₂. The water used was decarbonated. In comparative Figure 1 of the enclosed drawings, the X-ray diffractogram (XRD) is shown of the final solid obtained in the above reaction scheme 2 after the solvothermal treatment. The peaks observed in the diffractogram can be ascribed to the following compounds: calcite (JCPDS 01-072-1937), vaterite (JCPDS 00-024-0030), aragonite (JCPDS 00-041-1475), three different minerals of CaCO₃ and calcium hydroxide (JCPDS 01-084-1267). (JCPDS: Joint Committee on Powder Diffraction Standards). However, even though some Ca(OH)₂ can be determined by diffraction as shown in Fig. 1, when characterizing the morphology of the same final product by TEM (JEOL JEM-1230 at 120 kV), the enclosed comparative Figure 2 shows that neither nanotubes could be detected, nor any type of fibre-like shapes or morphologies could be observed.

H. Dhaouadi et al., Nano-Micro Letters 3(3), 153-159, 2011 describes a further method to obtain Mg(OH)₂ nano-rods, in this case by a hydrothermal reaction starting from MgO powder dispersed in aqueous solution in the presence of cetyltetramethylammonium bromide (CTAB) as surfactant. The reference reports that surfactants are used to prepare metal oxide nanoparticles in which the polar groups directly interact with the particles surface and strongly influence the shape. CTAB is a cationic surfactant which can be adsorbed on the surface of Mg(OH)₂ and act as a directing agent by the interaction of positively charged head groups (CTA+) with hydroxyl groups (O-H).

Therefore, again when trying to develop from such reaction a model for a possible synthetic route of Ca(OH)₂ nanotubes according to the purposes of the present invention, as a further attempt a corresponding synthetic route was adapted therefrom according to the following reaction scheme 3:

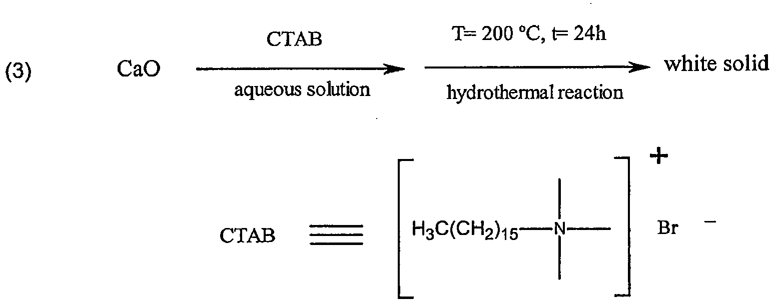

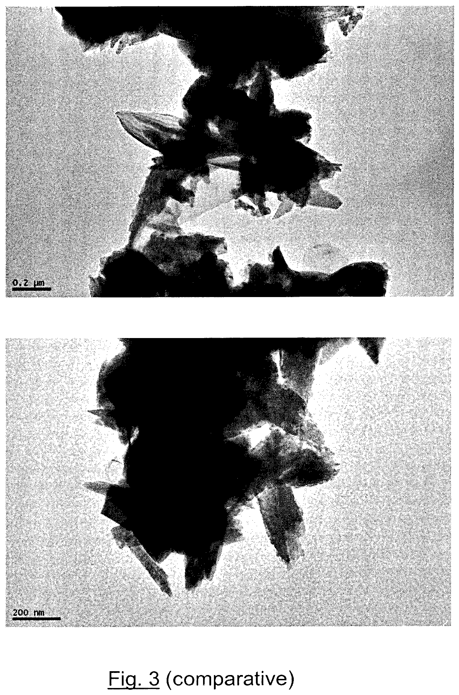

In this case a mixture of calcium hydroxide and calcium carbonate was obtained and characterized by XRD, but when the morphology of the mixture was analysed by TEM (JEOL JEM-1230 at 120 kV), platelet-like and shapeless morphologies were shown in the TEM evidence of the enclosed comparative Figure 3. Therefore the morphologies obtained were not even fibre-like or rod-like, not to mention nanotube-like as exactly aimed at according to the purposes of the present invention.

Also an attempt according to the purposes of the present invention to repeat the process as proposed by the aforementioned L. Zhuo et al. by replacing the raw material MgCl₂ with CaCl₂ proved to be unsuccessful, since no useful intermediate could be formed.

The above evidence further confirmed that, within the scope of the technical problem faced by the present invention, calcium does not behave the same way as magnesium so that the background art relating to Mg(OH)₂ nanotubes turns out to be an essentially useless model in the attempts to provide Ca(OH)₂ nanotubes with satisfying properties according to the purpose of the present invention.

To such purpose, thus a different synthetic route has to be conceived.

### BRIEF DESCRIPTION OF THE INVENTION

According to the present invention, portlandite nanotubes are obtained by a process comprising the following steps:
a) reacting calcium chloride with calcium oxide in aqueous solution, thus obtaining an aqueous dispersion;
b) feeding as such the aqueous dispersion obtained in step a) to a hydrothermal reaction, thus obtaining portlandite nanotubes.

The invention also concerns the use of the said portlandite nanotubes as a component for cementitious compositions, particularly as a reinforcing material to provide cementitious products with improved mechanical properties, especially resistance under tensile stress.

The invention also concerns the said cementitious compositions and final products obtained therefrom, which comprise the said portlandite nanotubes as a component, particularly as a reinforcing material. In particular, it refers to cementitious compositions comprising at least a hydraulic binder and aggregates for the production of mortars or concrete, comprising the aforementioned portlandite nanotubes.

### DETAILED DESCRIPTION OF THE INVENTION

In a preferred embodiment, portlandite nanotubes are obtained by carrying out step a) as follows: a CaCl_{2•}2H₂O (calcium chloride dihydrate) aqueous solution is heated at a moderate temperature, between 40°C and 100°C, more particularly between 60°C and 80°C and solid CaO is then added to the heated solution and stirred for a time of at least 5 minutes. When the addition of CaO is completed, heating is stopped and the obtained dispersion is left to cool and react at room temperature for a longer time, at least 24 hours.

After completion of step a), without any previous treatment such as filtering or washing, the dispersion is then subjected to step b) by directly feeding it as such into a reactor for the hydrothermal reaction according to step b).

The hydrothermal reaction is carried out by heating the dispersion at a temperature preferably in a range between 160°C and 270°C, more particularly between 180°C and 270°C for a time of at least 4 hours. The final solid thus obtained is filtered and rinsed with water.

The thus obtained solid is portlandite with nanotube structure, defined by characterisation mainly based on X-ray diffraction (XRD), transmission electron microscopy (TEM) and high resolution transmission electron microscopy (HRTEM). The nanotube structure of the fibre can be further confirmed by extracting electron density profiles from the TEM images, for example from a specific area delimited on the TEM image. The electron density profile shows the intensity of the electrons that pass through the analysed material. When the intensity is high, or relatively high, it means that there is no material, so no transit of electrons through any material, or that there is an electron transit through a very thin layer of material. Conversely, when the intensity is low or approaching zero, it means that the material is quite compact so that the electrons are not able to transit through the material. The electron density profile of the nanotube shows a high intensity outside the tube, which lowers to nearly zero (the electrons do not pass through the walls of the nanotube formed by layers of Ca(OH)₂), and then increases to a certain extent in the middle of the tube, which indicates that the electrons pass through a thinner layer of material as would be in case of a hollow tube.

Furthermore, from the electron density profile the inner diameter of the nanotube can also be measured.

### DESCRIPTION OF THE DRAWINGS

As described above, Figures 1 to 3 of the enclosed drawings show X-ray diffractogram, XRD (Fig. 1) and transmission electron microscopy (TEM) images (Figs. 2 and 3) of reference products made for comparative purposes and falling outside the scope of the present invention.

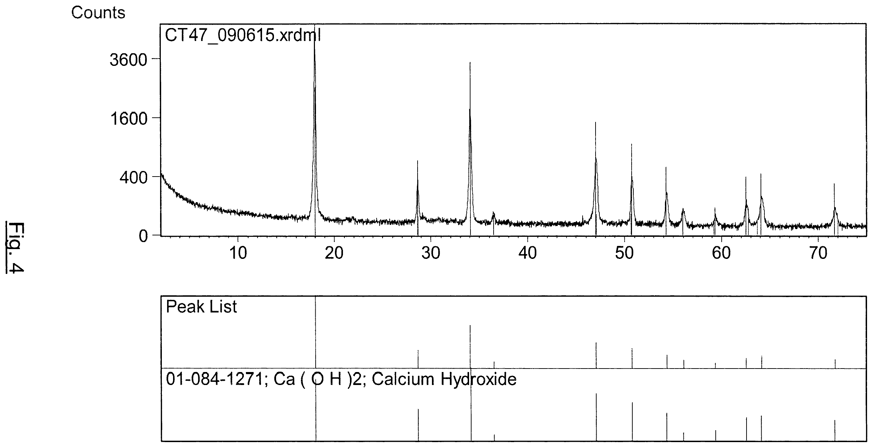

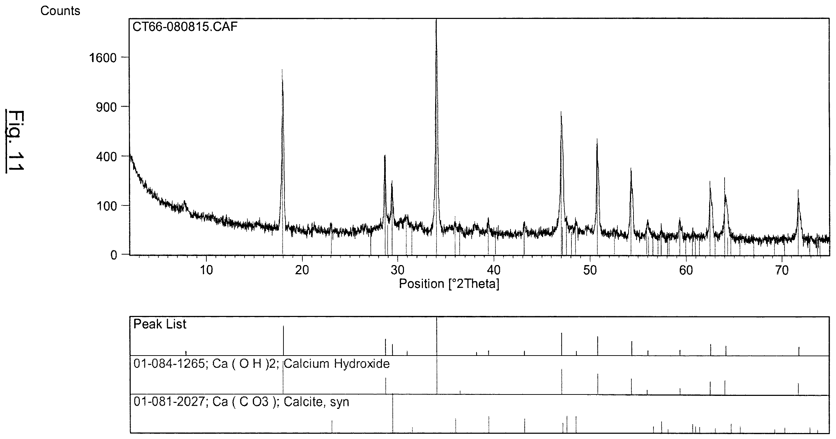

Figure 4 and Figure 11 show X-ray diffractograms, XRD, of samples as obtained in the following Examples 1 and 2, respectively, according to the invention.

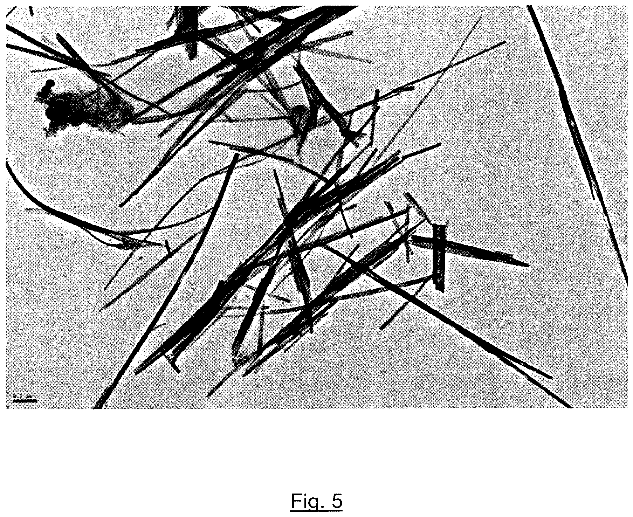

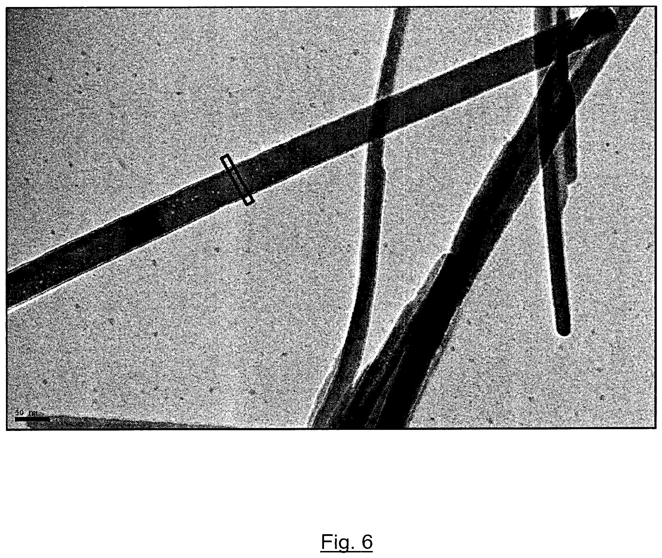

Figures 5 and 6 show transmission electron microscopy (TEM) images of the sample as obtained in the following Example 1 according to the invention.

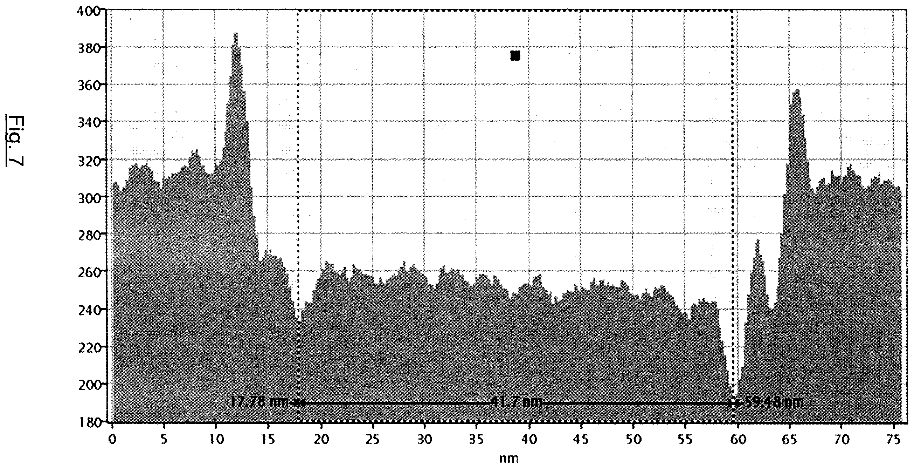

Figure 7 shows an electron density profile of the sample of Fig. 6.

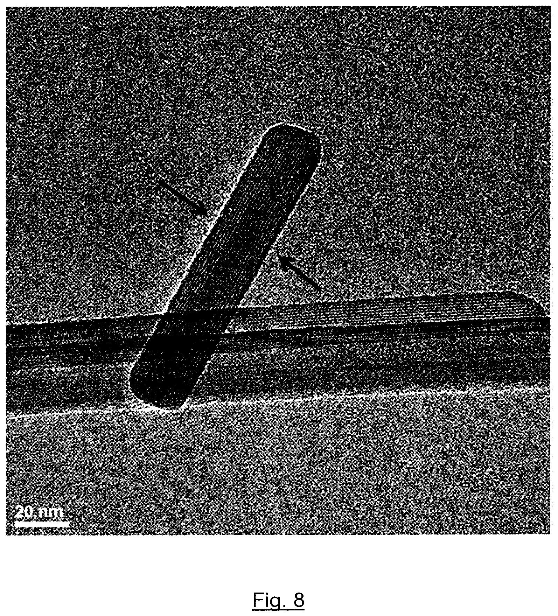

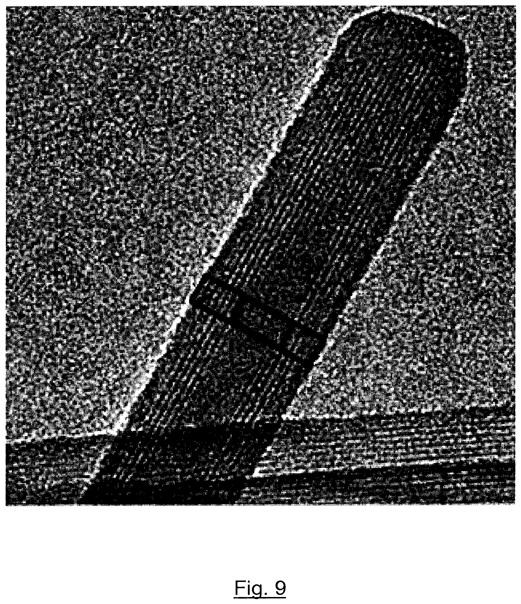

Figures 8 and 9 show a high-resolution transmission electron microscopy (HRTEM) image of the sample as obtained in the following Example 1 according to the invention.

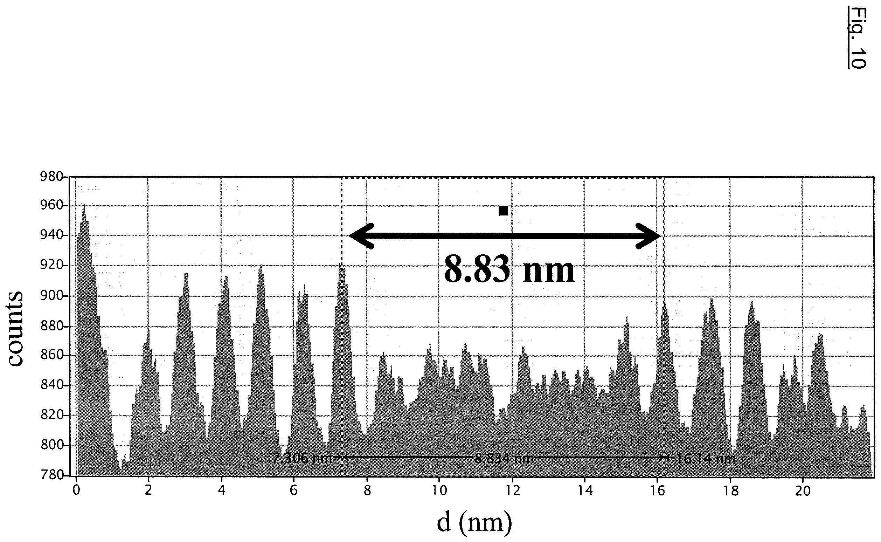

Figure 10 shows an electron density profile of the sample of Fig. 9.

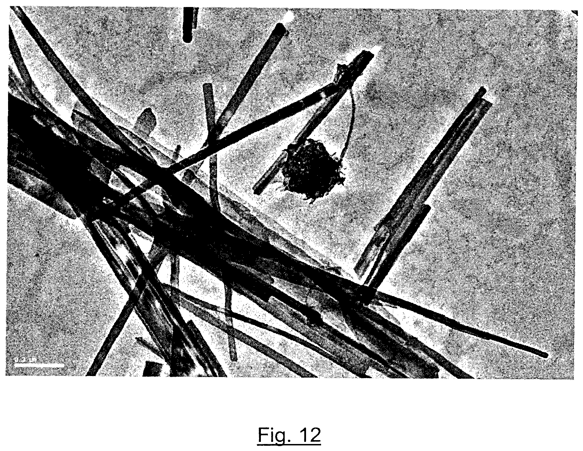

Figure 12 shows a transmission electron microscopy (TEM) image of the sample as obtained in the following Example 2 according to the invention.

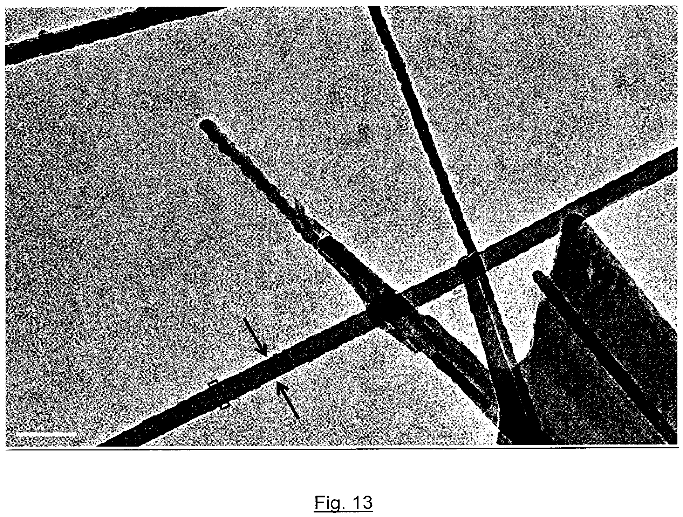

Figure 13 shows an enlargement of Fig. 12.

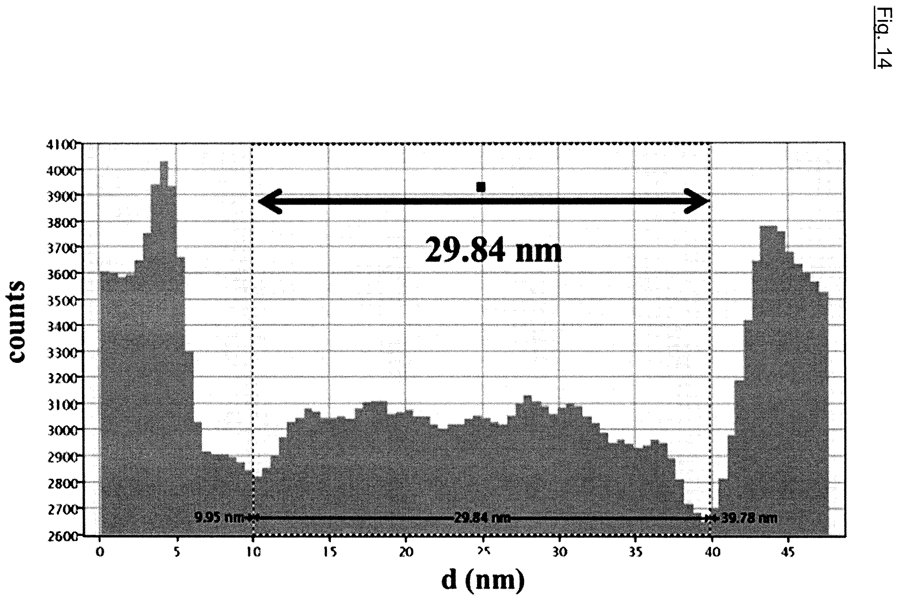

Figure 14 shows an electron density profile of the sample obtained in the same Example 2.

### EXAMPLES

The following examples illustrate the invention without in any way limiting the scope thereof. The characterisation of the final product obtained in the examples was carried out by X-ray diffraction (XRD), transmission electron microscopy (TEM) and high resolution transmission electron microscopy (HRTEM) as follows. The X-ray diffraction measurements were made by a Philips X'Pert Pro MPD pw3040/60, equipped with a copper ceramic tube and employing a continuous scanning in the 2θ range from 2° to 75°, and a generator power of 40 kV and 40 mA.

The final products were then characterised by a JEOL JEM-1230 thermionic emission transmission electron microscopy (120kV) with a digital camera and some of the samples were also observed on a JEM-2200 FS/CR (JEOL, Ltd.) field emission gun (FEG) transmission electron microscopy operated at 200 kV. The samples were dispersed in acetone and a drop of the dispersion was applied to a carbon grid.

### EXAMPLE 1

3 M aqueous solution of CaCl_{2•}2H₂O is prepared. While heating the solution at 70°C, solid CaO is added and stirred for 10 minutes. The mixture is left reacting for 68 hours, at room temperature. Then the so obtained dispersion is directly fed as such, without filtering or washing, to a reactor and heated to 200 °C. The hydrothermal reaction is carried out for 15 hours. The solid obtained is filtered and rinsed with water.

The final solid was characterized by X-ray diffraction as shown in the enclosed Figure 4. The XRD pattern of the solid is ascribed to the hexagonal phase of Ca(OH)₂ (JCPDS 01-084-1271).

The solid was also analysed by transmission electron microscopy (JEOL JEM-1230 at 120 kV), scale bar 0.2 µm, see Fig. 5. The product obtained shows fibre-like/rod-like morphologies of micrometres in length and diameters between 23 nm and 44 nm. At higher magnification (scale bar 50 nm), see Fig. 6, a nanotube morphology can clearly be defined, as indicated by the arrows.

The nanotube nature of the fibre can be further confirmed by extracting electron density profiles from the TEM images, see Fig. 7, which shows the electron density profile extracted from the area delimited by the box traced on the image of Fig. 6. The ordinate refers to counts and the abscissa to d, measured as nm.

As mentioned above, the electron density profile shows the intensity of the electrons that pass through the analysed material. When the intensity is high or relatively high, it means that the electrons do not go through any material or they go through a very thin layer of material. When the intensity is very low or almost zero, it means that the electrons are not able to go through the material which indicates that the material is quite compact. The electron density profile of the nanotube shows a high intensity outside the tube, which lowers to nearly zero where the electrons do not go through the walls of the nanotube formed by layers of Ca(OH)₂, and then increases in the middle of the tube to a certain extent, which indicates that the electrons there pass through a thinner layer of material, as in the case of a hollow tube. Furthermore, from the electron density profile, the inner diameter of the nanotube can also be measured, which turns out to be around 42 nm in the case of the example at issue.

The product obtained in Example 1 was then analysed by high resolution transmission electron microscopy, HRTEM (JEOL JEM-2200 FS/CR operated at 200 kV). In figure 8 a Ca(OH)₂ nanotube is shown at high resolution (indicated by the arrows). In the image of Fig. 8 the different layers that form the wall of the nanotube can be seen, clearly showing its multiwalled nature. The inner diameter of the nanotube is 8.8 nm.

Figure 9 is an enlargement of Fig. 8, where a specific area is delimited by a box, again for electron density profile purpose. The corresponding electron density profile as obtained from that traced box is shown in Figure 10. The ordinate refers to counts and the abscissa to d, measured as nm.

### EXAMPLE 2

To a 3 M CaCl_{2•}2H₂O aqueous solution kept at 70°C, solid CaO is added and stirred for 30 minutes and the dispersion is left reacting for 44 hours at room temperature. Then the so obtained dispersion, without previous filtering or washing, is fed as such to a reactor and heated to a temperature of 250 °C. The reaction is carried out for 15 hours. The solid thus obtained is filtered and rinsed with water.

The solid was characterized by X-ray diffraction, see Fig. 11. Apart from a set of peaks of low intensity which can be assigned to the rhombohedral phase of calcium carbonate (JCPDS 01-081-2027), possibly formed due to a small quantity of CO₂ unremoved from the water, the main peaks obtained can be ascribed to the hexagonal phase of Ca(OH)₂ (JCPDS 01-084-1265).

The product obtained from Example 2 was also characterized by transmission electron microscopy (JEOL JEM-1230 at 120 kV), see Fig. 12, scale bar 0.2 µm, and the enlargement of Fig. 13, scale bar 100 nm. TEM images show that fibre-like morphologies of portlandite where formed in the synthesis, as well as nanotube particles shown in Fig. 13 and marked with arrows, scale bar 100 nm. The diameter of the fibres or nanotubes of Example 2 ranges between 17 nm and 44 nm.

As shown in Fig. 14, the electron density profile is reported with reference to the area marked by a box on the nanotube of Fig. 13. The ordinate refers to counts and the abscissa to d, measured as nm. The electron density profile of the marked area confirms the nanotube structure at issue. The inner diameter of the nanotube is 29.84 nm.

In conclusion, the present invention can finally accomplish the high-felt need of providing portlandite with a nanotube structure, portlandite being a material highly compatible with a cementitious matrix. In particular, the portlandite nanotubes according to the present invention appear to be an ideal reinforcing component in cementitious compositions so as to provide final cementitious products, such as mortars or concrete, with improved mechanical properties, such as improved resistance under tensile stress.

Moreover, portlandite nanotubes according to the present invention are a product-by-process where such process is substantially characterized by simple and straightforward steps, under mild operating conditions. In particular, no process intermediates need to be separated or isolated, and the whole process is carried out in aqueous solution, these being highly advantageous conditions for industrial scale-up.

## Claims

1. Portlandite nanotubes obtained by a process comprising the following steps:
a) reacting calcium chloride with calcium oxide in aqueous solution, thus obtaining an aqueous dispersion;
b) feeding as such the aqueous dispersion obtained in step a) to a hydrothermal reaction, thus obtaining portlandite nanotubes.

2. Portlandite nanotubes according to claim 1 obtained by a process comprising the following steps:
a) heating a CaCl_{2•}2H₂O aqueous solution at a temperature between 40°C and 100°C, adding solid CaO to the heated solution, letting the reaction run at room temperature;
b) feeding as such the aqueous dispersion obtained in step a) to the hydrothermal reaction, heating the dispersion at a temperature in a range between 160°C and 270°C, for a time of a least 4 hours, thus obtaining portlandite nanotubes.

3. Portlandite nanotubes according to claim 2 wherein in step a) solid CaO is added to the heated solution and stirred for a time of at least 5 minutes and the reaction is run at room temperature for a time of at least 24 hours.

4. Portlandite nanotubes according to claims 1 to 3 defined by characterisation based on X-ray diffraction (XRD), transmission electron microscopy (TEM) and high resolution transmission electron microscopy (HRTEM) as per the enclosed drawings.

5. Process for producing portlandite nanotubes, comprising the following steps:
a) reacting calcium chloride with calcium oxide in aqueous solution, thus obtaining an aqueous dispersion;
b) feeding as such the aqueous dispersion obtained in step a) to a hydrothermal reaction, thus obtaining portlandite nanotubes.

6. Process according to claim 5 comprising the following steps:
a) heating a CaCl_{2•}2H2O aqueous solution at a temperature between 40°C and 100°C, adding solid CaO to the heated solution, letting the reaction run at room temperature;
b) feeding as such the aqueous dispersion obtained in step a) to the hydrothermal reaction, heating the dispersion at a temperature in a range between 160°C and 270°C for a time of a least 4 hours, thus obtaining portlandite nanotubes.

7. Process according to claim 6 wherein in step a) solid CaO is added to the heated solution, stirred for a time of at least 5 minutes and the reaction is run at room temperature for a time of at least 24 hours.

8. Process according to claims 5 to 7 wherein the portlandite nanotubes are defined by characterisation based on X-ray diffraction (XRD), transmission electron microscopy (TEM) and high resolution transmission electron microscopy (HRTEM) as per the enclosed drawings.

9. Use of the portlandite nanotubes according to claims 1 to 4 as a component in cementitious compositions to provide mortars or concrete.

10. Use according to claim 9 as a reinforcing material in cementitious compositions.

11. A cementitious composition comprising an hydraulic binder and aggregates for the production of mortars or concrete, **characterized in that** it comprises portlandite nanotubes according to claims 1 to 4.

## Patentansprüche

1. Portlandit-Nanoröhrchen, erhalten mittels eines Prozesses, der die folgenden Schritte aufweist:
a) Reaktion von Kalziumchlorid mit Kalziumoxid in wässriger Lösung zum Erhalten einer wässrigen Dispersion;
b) Zuführen der aus Schritt a) erhaltenen wässrigen Dispersion zu einer hydrothermalen Reaktion zum Erhalten von Portlandit-Nanoröhrchen.

2. Portlandit-Nanoröhrchen gemäß Anspruch 1, erhalten mittels eines Prozesses der die folgenden Schritte aufweist:
a) Erwärmen einer wässrigen CaCl₂•2H₂O - Lösung bei einer Temperatur zwischen 40°C und 100°C, Zugabe von festem CaO zur erwärmten Lösung, ablaufen lassen der Reaktion bei Raumtemperatur;
b) Zuführen der aus Schritt a) erhaltenen wässrigen Dispersion zu einer hydrothermalen Reaktion, Erwärmen der Dispersion auf eine Temperatur im Bereich zwischen 160°C und 270°C für mindestens 4 Stunden zum Erhalten von Portlandit-Nanoröhrchen.

3. Portlandit-Nanoröhrchen gemäß Anspruch 2, wobei in Schritt a) festes CaO zu der erwärmten Lösung gegeben und mindestens 5 Minuten gerührt wird, und die Reaktion bei Raumtemperatur für mindestens 24 Stunden ablaufen gelassen wird.

4. Portlandit-Nanoröhrchen gemäß den Ansprüchen 1 bis 3, definiert mittels Charakterisierung basierend auf Röntgenstrahlungbeugung (XRD), Transmissionselektronenmikroskopie (TEM) und hochauflösender Transmissionselektronenmikroskopie (HRTEM), wie aus den beiliegenden Zeichnungen ersichtlich.

5. Verfahren zur Herstellung von Portlandit-Nanoröhrchen, das die folgenden Schritte aufweist:
a) Reagieren lassen von Kalziumchlorid mit Kalziumoxid in wässriger Lösung zum Erhalten einer wässrigen Dispersion;
b) Zuführen der aus Schritt a) erhaltenen wässrigen Dispersion zu einer hydrothermalen Reaktion zum Erhalten von Portlandit-Nanoröhrchen.

6. Verfahren gemäß Anspruch 5, aufweisend die folgenden Schritte:
a) Erwärmen einer wässrigen CaCl₂•2H₂O - Lösung bei einer Temperatur zwischen 40°C und 100°C, Zugeben von festem CaO zur erwärmten Lösung, Ablaufen lassen der Reaktion bei Raumtemperatur;
b) Zuführen der aus Schritt a) erhaltenen wässrigen Dispersion zu einer hydrothermalen Reaktion, Erwärmen der Dispersion auf eine Temperatur im Bereich zwischen 160°C und 270°C für mindestens 4 Stunden zum Erhalten von Portlandit-Nanoröhrchen.

7. Verfahren gemäß Anspruch 6, wobei in Schritt a) festes CaO zur erwärmten Lösung gegeben und mindestens 5 Minuten gerührt wird und die Reaktion bei Raumtemperatur für mindestens 24 Stunden ablaufen gelassen wird.

8. Verfahren gemäß den Ansprüchen 5 bis 7, wobei die Portlandit-Nanoröhrchen definiert werden mittels Charakterisierung basierend auf Röntgenstrahlenbeugung (XRD), Transmissionselektronenmikroskopie (TEM) und hochauflösender Transmissionselektronenmikroskopie (HRTEM), wie aus den beiliegenden Zeichnungen ersichtlich.

9. Verwendung der Portlandit-Nanoröhrchen gemäß den Ansprüchen 1 bis 4 als eine Komponente in zementartigen Zusammensetzungen, um Mörtel oder Beton zu verstärken.

10. Verwendung gemäß Anspruch 9 als verstärkendes Material in zementartigen Zusammensetzungen.

11. Zementartige Zusammensetzung, aufweisend ein hydraulisches Bindemittel und Zuschlagstoffe zur Herstellung von Mörtel oder Beton,
**dadurch gekennzeichnet, dass** diese Portlandit-Nanoröhrchen gemäß den Ansprüchen 1 bis 4 aufweist.

## Revendications

1. Nanotubes de Portlandite obtenus par une procédure comprenant les étapes suivantes consistant à :
a) faire réagir du chlorure de calcium avec un oxyde de calcium dans une solution aqueuse, obtenant ainsi une dispersion aqueuse ;
b) alimenter une réaction hydrothermique en la dispersion aqueuse en tant que telle obtenue à l'étape a), obtenant ainsi des nanotubes de Portlandite.

2. Nanotubes de Portlandite selon la revendication 1, obtenus par un procédé comprenant les étapes suivantes consistant à :
a) chauffer une solution aqueuse de CaCl₂•2H₂O à une température comprise entre 40 °C et 100 °C, ajouter du CaO solide à la solution chauffée, laisser la réaction se conduire à température ambiante ;
b) alimenter la réaction hydrothermique en la dispersion aqueuse en tant que telle obtenue à l'étape a), chauffer la dispersion à une température dans une plage entre 160 °C et 270 °C, pendant une durée d'au moins 4 heures, obtenant ainsi des nanotubes de Portlandite.

3. Nanotubes de Portlandite selon la revendication 2, dans lesquels à l'étape a) du CaO solide est ajouté à la solution chauffée et agité pendant une durée d'au moins 5 minutes et la réaction est conduite à température ambiante pendant une durée d'au moins 24 heures.

4. Nanotubes de Portlandite selon les revendications 1 à 3, définis par une caractérisation sur la base de diffraction aux rayons X (XRD), une microscopie électronique en transmission (TEM) et une microscopie électronique en transmission haute résolution (HRTEM) conformément aux dessins en annexe.

5. Procédé de production de nanotubes de Portlandite, comprenant les étapes suivantes consistant à :
a) faire réagir du chlorure de calcium avec un oxyde de calcium dans une solution aqueuse, obtenant ainsi une dispersion aqueuse ;
b) alimenter une réaction hydrothermique en la dispersion aqueuse en tant que telle obtenue à l'étape a), obtenant ainsi des nanotubes de Portlandite.

6. Procédé selon la revendication 5, comprenant les étapes suivantes consistant à :
a) chauffer une solution aqueuse de CaCl₂•2H₂O à une température comprise entre 40 °C et 100 °C, ajouter du CaO solide à la solution chauffée, laisser la réaction se conduire à la température ambiante ;
b) alimenter la réaction hydrothermique en la dispersion aqueuse en tant que telle obtenue à l'étape a), chauffer la dispersion à une température dans une plage entre 160 °C et 270 °C, pendant une durée d'au moins 4 heures, obtenant ainsi des nanotubes de Portlandite.

7. Procédé selon la revendication 6, dans lequel à l'étape a) du CaO solide est ajouté à la solution chauffée, agité pendant une durée d'au moins 5 minutes et la réaction est conduite à température ambiante pendant une durée d'au moins 24 heures.

8. Procédé selon les revendications 5 à 7, dans lequel les nanotubes de Portlandite sont définis par une caractérisation sur la base de diffraction aux rayons X (XRD), une microscopie électronique en transmission (TEM) et une microscopie électronique en transmission haute résolution (HRTEM) conformément aux dessins en annexe.

9. Utilisation des nanotubes de Portlandite selon les revendications 1 à 4 comme composant dans des compositions cimentaires pour former des mortiers ou du béton.

10. Utilisation selon la revendication 9, comme matériau d'armature dans des compositions cimentaires.

11. Composition cimentaire comprenant un liant hydraulique et des agrégats pour la production de mortiers ou béton, **caractérisée en ce qu'**elle comprend des nanotubes de Portlandite selon les revendications 1 à 4.
